# EUROPEAN PATENT APPLICATION

(11) **EP 3 605 952 A1**
(43) Date of publication of application: **05.02.2020**
(21) Application number: 18772042.0
(22) Date of filing: 31.01.2018
(51) Int. Cl.: H04L 12/24, A24F 47/00, H04W 4/02, G06Q 30/00

(54) **ELECTRONIC CIGARETTE MANAGEMENT METHOD, MOBILE TERMINAL AND ELECTRONIC CIGARETTE**

(30) Priority: 20.03.2017 CN 201710166416
(71) Applicant: Changzhou Patent Electronic Technology Co., Ltd, Changzhou, Jiangsu 213001 (CN)
(72) Inventor: QIU, Weihua, Changzhou Jiangsu 213022 (CN)
(74) Representative: Zaboliene, Reda
(86) International application number: PCT/CN2018/074675
(87) International publication number: WO 2018/171337

(57) **Abstract**

An electronic cigarette management method, a mobile terminal and an electronic cigarette. The electronic cigarette management method comprises: scanning a graphic identification code of the electronic cigarette to obtain identity identification information of the electronic cigarette; establishing a binding relationship with the electronic cigarette based on the identity identification information; and sending a management instruction to the electronic cigarette based on the binding relationship so as to control the electronic cigarette to work according to the management instruction.

## Description

### TECHNICAL FIELD

The present invention relates to the field of electronic cigarette technology, and in particular, to an electronic cigarette management method, a mobile terminal, and an electronic cigarette.

### BACKGROUND

Electronic cigarette, also known as virtual cigarette, is an electronic product that imitates cigarettes and has the same appearance, smoke, taste and feel as cigarettes. It is a product that allows users to inhale the smoke formed by atomization of nicotine and the like. Because electronic cigarettes are safe, convenient, healthy, and environmentally friendly to a certain extent, they are gradually favored by more and more users.

Currently, electronic cigarettes on the market generally have only a single suction function. For example, a physical control switch is arranged on the electronic cigarette, and the user only needs to operate the control switch, so that the atomizer of the electronic cigarette can be in a working state, thereby achieving the purpose of smoking the electronic cigarette.

As mentioned above, the function of the electronic cigarette is currently single and the degree of intelligence is low. Therefore, it is necessary to expand the function of the electronic cigarette to make it more intelligent, and enrich the management method of the electronic cigarette so that it can satisfy the diversity demands of the users.

### SUMMARY

In order to solve the problems of the related art, an embodiment of the present invention provides an electronic cigarette management method, a mobile terminal, and an electronic cigarette. The technical solution is as follows:

In a first aspect, an electronic cigarette management method is provided for being applied to a mobile terminal. The method includes:
S1: scanning a graphic identification code of an electronic cigarette to obtain the identity information of the electronic cigarette;
S2: establishing a binding relationship with the electronic cigarette based on the identity information; and
S3: sending a management instruction to the electronic cigarette based on the binding relationship to control the electronic cigarette to operate according to the management instruction.

In another embodiment, the method further includes:
uploading the identity information to the server, wherein the server is configured to send a confirmation prompt information to the mobile terminal after determining that the electronic cigarette is genuine according to the identity information;
after receiving the confirmation prompt information, performing the step of establishing the binding relationship with the electronic cigarette based on the identity information.

In another embodiment, the step of S3 includes:
S31: acquiring a geographic distance between a first location of the electronic cigarette and a second location of the mobile terminal;
S32: if the geographic distance is greater than a preset threshold, sending an anti-lost management instruction to the electronic cigarette based on the binding relationship, the anti-lost management instruction being configured to control the electronic cigarette to enter a locking state.

In another embodiment, the step of S32 includes:
S321: if the geographic distance is greater than the preset threshold, generating and displaying a missing prompt information of the electronic cigarette;
S322: when receiving an operation confirming that the electronic cigarette is lost, sending the anti-lost management instruction to the electronic cigarette based on the binding relationship.

In another embodiment, the method further includes:
setting a functional option of opening the anti-lost mode in a specified application matching the electronic cigarette;
when detecting a triggering operation of the functional option, sending an opening instruction of the anti-lost mode to the electronic cigarette, the opening instruction being configured to control the electronic cigarette to enter the anti-lost mode;
wherein in the step of S32, sending an anti-lost management instruction to the electronic cigarette based on the binding relationship includes:
sending the anti-lost management instruction to the electronic cigarette based on the binding relationship in the case that the anti-lost mode of the electronic cigarette is enabled;
wherein the step of S321 includes:
if the geographic distance is greater than the preset threshold, generating and displaying the missing prompt information of the electronic cigarette in the case that the anti-lost mode of the electronic cigarette is enabled.

In another embodiment, the step of S3 includes:
S33: sending a suction data management instruction to the electronic cigarette based on the binding relationship;
S34: receiving, by using a wireless network, the user's suction data sent by the electronic cigarette that has established the binding relationship, the user's suction data being collected by the electronic cigarette when the user's suction action is detected after receiving the suction data management instruction.

In another embodiment, the method further includes:
displaying the user's suction data after receiving the user's suction data, and uploading the user's suction data to the server, wherein the server is configured to analyze the user's suction data and return the obtained analysis result to the mobile terminal;
displaying the analysis result after receiving the analysis result.

In another embodiment, the step of S2 includes:
using the identity information as the login account to log in a specified application that matches the electronic cigarette, and storing a corresponding relation between the identity information and a terminal identity of the mobile terminal, so as to establish the binding relationship with the electronic cigarette.

In another embodiment, the method further includes:
determining whether an application scanning the graphic identification code is a specified application that matches the electronic cigarette;
if the application scanning the graphic identification code is the specified application, continuing to invoke the specified application to perform the step of S2;
if the application scanning the graphic identification code is not the specified application, detecting whether the specified application is installed locally; if the specified application is installed locally, invoking the specified application to perform the step of S2;
if the application scanning the graphic identification code is not the specified application and the specified application is not installed locally, acquiring and displaying the download link page of the specified application.

In another embodiment, the method further includes:
after logging in the specified application, displaying a prompt message of whether to set the login account;
after detecting the setting confirmation operation performed by the user, receiving the login user name and the login password inputted by the user and uploading the login user name and the login password to the server, a corresponding relation between the login user name, the login password and the identity information is stored by the server.

In a second aspect, an electronic cigarette management method is provided for being applied to an electronic cigarette. The method includes:
receiving a management instruction sent by a mobile terminal based on a binding relationship established with the mobile terminal;
controlling the electronic cigarette to operate according to the management instruction;
wherein the binding relationship is established by the mobile terminal based on an identity information of the electronic cigarette, and the identity information is obtained by scanning the graphic identification code of the electronic cigarette using the mobile terminal.

In another embodiment, the method further includes:
acquiring first location, the first location being the location information of the electronic cigarette;
sending the first location, by using a wireless network, to the mobile terminal that has established the binding relationship, wherein the mobile terminal is configured to acquire a geographic distance between the first location and a second location of the mobile terminal, and send an anti-lost management instruction to the electronic cigarette based on the binding relationship when detecting that the geographic distance is greater than a preset threshold and the anti-lost mode of the electronic cigarette is opened;
wherein the step of controlling the electronic cigarette to operate according to the management instruction includes:
after receiving the anti-lost management instruction, controlling the electronic cigarette to enter the locking state based on the binding relationship.

In another embodiment, the method further includes:
receiving, by using a wireless network, second location sent by the mobile terminal that has established the binding relationship;
wherein the step of controlling the electronic cigarette to operate according to the management instruction includes:
calculating a geographic distance between a first location of the electronic cigarette and the second location;
controlling the electronic cigarette to enter a locking state if the geographic distance is greater than a preset threshold.

In another embodiment, the method further includes:
receiving, according to the binding relationship, an opening instruction of the anti-lost mode sent by the mobile terminal, wherein the opening instruction is sent by the mobile terminal after detecting a triggering operation of a functional option of opening the anti-lost mode in a specified application matching the electronic cigarette;
controlling the electronic cigarette to enter the anti-lost mode according to the opening instruction;
wherein the step of controlling the electronic cigarette to enter a locking state if the geographic distance is greater than a preset threshold includes:
controlling the electronic cigarette to enter the locking state if the electronic distance is greater than the preset threshold in the case that the electronic cigarette is in the anti-lost mode.

In another embodiment, the step of controlling the electronic cigarette to operate according to the management instruction includes:
after receiving a suction data management instruction sent by the mobile terminal that has established the binding relationship, collecting the user's suction data when the user's suction action is detected;
sending the user's suction data to the mobile terminal by using a wireless network, wherein the mobile terminal is configured to display the user's suction data and upload the user's suction data to a server, the server is configured to analyze the user's suction data and return the obtained analysis result to the mobile terminal for displaying the analysis result on the mobile terminal.

In a third aspect, a mobile terminal is provided, wherein the mobile terminal includes:
a scanning module configured to scan a graphic identification code of the electronic cigarette to obtain an identity information of the electronic cigarette;
an establishing module configured to establish a binding relationship with the electronic cigarette based on the identity information;
a sending module configured to send a management instruction to the electronic cigarette based on the binding relationship to control the electronic cigarette to operate according to the management instruction;
wherein the management instruction at least includes anti-lost management instruction and suction data management instruction.

In another embodiment, the mobile terminal further includes:
a first receiving module configured to receive, by using a wireless network, first location sent by the electronic cigarette that has established the binding relationship;
a calculating module configured to calculate a geographic distance between the first location and the second location of the mobile terminal;

The sending module is configured to send, when the geographic distance is greater than a preset threshold, an anti-lost management instruction to the electronic cigarette based on the binding relationship, wherein the anti-lost management instruction is used to control the electronic cigarette to enter the locking state.

The mobile terminal further includes:
a generating module configured to generate, when the geographic distance is greater than the preset threshold, a missing prompt information of the electronic cigarette;
a first display module configured to display the missing prompt information of the electronic cigarette.

In another embodiment, the mobile terminal further includes:
a setting module configured to set a functional option of opening the anti-lost mode in a specified application that matches the electronic cigarette;

The sending module is further configured to send, if the functional option is triggered, an opening instruction to the electronic cigarette to open the anti-lost mode, wherein the opening instruction is used to control the electronic cigarette to enter the anti-lost mode.

The sending module 303 is configured to send an anti-lost management instruction to the electronic cigarette based on the binding relationship in the case that the anti-lost mode of the electronic cigarette is opened.

The generating module 306 is configured to generate a missing prompt information of the electronic cigarette if the geographic distance is greater than the preset threshold in the case that the anti-lost mode of the electronic cigarette is opened.

In another embodiment, the sending module is configured to send a suction data management instruction to the electronic cigarette based on the binding relationship; the mobile terminal further includes:

a second receiving module configured to receive, by using a wireless network, the user's suction data sent by the electronic cigarette that has established the binding relationship, and the user's suction data is collected by the electronic cigarette when detecting the suction action of the user after receiving the suction data management instruction.

In another embodiment, the mobile terminal further includes:
a second display module configured to display the user's suction data after receiving the user's suction data;
a first uploading module configured to upload the user's suction data to the server, wherein the server is configured to analyze the user's suction data and return the obtained analysis result to the mobile terminal.

The second display module is further configured to display the analysis result after receiving the analysis result.

In another embodiment, the establishing module is configured to log in the specified application that matches the electronic cigarette by using the identity information as the login account, and store the corresponding relation between the identity information and the terminal identity information of the mobile terminal, to thereby complete the establishment of the binding relationship with the electronic cigarette.

In another embodiment, the mobile terminal further includes:
a determining module configured to determine whether the application scanning the graphic identification code is a specified application;
if the application scanning the graphic identification code is the specified application, the establishing module is configured to continue to invoke the specified application to perform the step of establishing the binding relationship with the electronic cigarette based on the identity information;
a detecting module configured to detect, if the application scanning the graphic identification code is not the specified application, whether the specified application is installed locally; and if the specified application is locally installed, the establishing module is configured to invoke the specified application to perform the step of establishing the binding relationship with the electronic cigarette based on the identity information;
an acquiring module configured to acquire a download link page of the specified application if the application scanning the graphic identification code is not the specified application and the specified application is not installed locally;
a third display module configured to display the download link page of the specified application.

In another embodiment, the mobile terminal further includes:
a second uploading module configured to upload the identity information to the server; the server is configured to send a confirmation prompt information to the mobile terminal after determining that the electronic cigarette is genuine according to the identity information.

The establishing module is configured to perform the step of establishing the binding relationship with the electronic cigarette based on the identity information after receiving the confirmation prompt information.

In another embodiment, the mobile terminal further includes:
a fourth display module configured to display, after logging in the specified application, a prompt information of whether to set the login account;
a third receiving module configured to receive a login user name and a login password inputted by the user after detecting the setting confirmation operation performed by the user;
a third uploading module configured to upload the login user name and the login password inputted by the user to the server; the server stores the corresponding relation between the login user name, the login password, and the identity information.

In a fourth aspect, an electronic cigarette is provided, wherein the electronic cigarette includes:
a wireless network module configured to receive, according to the binding relationship established with the mobile terminal, a management instruction sent by the mobile terminal;
a control module configured to control the electronic cigarette to operate according to the management instruction;
wherein the binding relationship is established by the mobile terminal based on the identity information of the electronic cigarette, and the identity information is obtained by scanning the graphic identification code of the electronic cigarette using the mobile terminal. The management instruction at least includes anti-lost management instruction and suction data management instruction.

In another embodiment, the electronic cigarette further includes:
a positioning module configured to acquire first location, wherein the first location is the location information of the electronic cigarette.

The wireless network module is configured to send, by using a wireless network, the first location to the mobile terminal that has established the binding relationship. The mobile terminal is configured to calculate a geographic distance between the first location and the second location of the mobile terminal. When detecting that the geographic distance is greater than a preset threshold and the anti-lost mode of the electronic cigarette is opened, the mobile terminal sends an anti-lost management instruction to the electronic cigarette that has established the binding relationship.

The control module is configured to control the electronic cigarette to enter the locking state after receiving the anti-lost management instruction based on the binding relationship.

In another embodiment, the wireless network module is further configured to receive, by using a wireless network, second location sent by the mobile terminal that has established the binding relationship; the electronic cigarette further includes:
a calculation module configured to calculate a geographic distance between the first location and the second location.

The control module is configured to control the electronic cigarette to enter the locking state if the geographic distance is greater than a preset threshold.

In another embodiment, the wireless network module is further configured to receive an opening instruction of the anti-lost mode sent by the mobile terminal based on the binding relationship, wherein the opening instruction is sent by the mobile terminal when the functional option of the anti-lost mode is triggered in a specified application that matches the electronic cigarette.

The control module is further configured to control the electronic cigarette to enter the anti-lost mode according to the opening instruction.

The control module is further configured to control the electronic cigarette to enter the locking state if the electronic cigarette is in the anti-lost mode and the geographic distance is greater than the preset threshold.

In another embodiment, the control module is configured to collect the user's suction data when detecting the suction action of the user after receiving the suction data management instruction sent by the mobile terminal that has established the binding relationship.

The wireless network module is configured to send the user's suction data to the mobile terminal by using a wireless network, the mobile terminal is configured to display the user's suction data, and upload the user's suction data to the server. The server performs analysis on the user's suction data, and the obtained analysis result is returned to the mobile terminal, so that the mobile terminal can display the analysis result.

A fifth aspect provides a mobile terminal, wherein the mobile terminal includes:
a memory and a processor;
wherein the memory stores therein at least one program instruction;
the processor, by executing the at least one program instruction, implements the electronic cigarette management method of the first aspect of the present invention.

In a sixth aspect, a computer readable storage medium is provided having stored therein one or more instructions. The one or more instructions are executed by a processor within a mobile terminal to implement the electronic cigarette management method of the first aspect of the present invention.

In a seventh aspect, an electronic cigarette is provided, wherein the electronic cigarette includes:
a memory and a processor;
wherein the memory stores therein at least one program instruction;
the processor, by executing the at least one program instruction, implements the electronic cigarette management method of the second aspect of the present invention.

In an eighth aspect, a computer readable storage medium is provided having stored therein one or more instructions. The one or more instructions are executed by a processor within a mobile terminal to implement the electronic cigarette management method of the second aspect of the present invention.

The beneficial effects brought by the technical solutions provided by the embodiments of the present invention are:
Since the electronic cigarette is provided with the graphic identification code carrying the identity information of the electronic cigarette, the mobile terminal can obtain the identity information of the electronic cigarette by scanning the graphic identification code, and can establish a binding relationship with the electronic cigarette based on the identity information obtained by scanning the code, to realize diversified management of the electronic cigarette based on the binding relationship and expand the function of the electronic cigarette to make it more intelligent.

### BRIEF DESCRIPTION OF THE DRAWINGS

In order to more clearly illustrate the technical solutions in the embodiments of the present invention, the drawings used in the description of the embodiments will be briefly described below. It is obvious that the drawings in the following description are only some embodiments of the present invention. For those of ordinary skill in the art, other drawings may also be obtained in light of these drawings without any creative efforts.
FIG. 1A is a system architecture diagram of an electronic cigarette management method according to an embodiment of the present invention;
FIG. 1B is a schematic structural diagram of an electronic cigarette according to an embodiment of the present invention;
FIG. 2 is a flowchart of an electronic cigarette management method according to an embodiment of the present invention;
FIG. 3A is a schematic structural diagram of a mobile terminal according to an embodiment of the present invention;
FIG. 3B is a schematic structural diagram of a mobile terminal according to an embodiment of the present invention;
FIG. 3C is a schematic structural diagram of a mobile terminal according to an embodiment of the present invention;
FIG. 3D is a schematic structural diagram of a mobile terminal according to an embodiment of the present invention;
FIG. 3E is a schematic structural diagram of a mobile terminal according to an embodiment of the present invention;
FIG. 3F is a schematic structural diagram of a mobile terminal according to an embodiment of the present invention;
FIG. 3G is a schematic structural diagram of a mobile terminal according to an embodiment of the present invention;
FIG. 3H is a schematic structural diagram of a mobile terminal according to an embodiment of the present invention;
FIG. 4A is a schematic structural diagram of an electronic cigarette according to an embodiment of the present invention;
FIG. 4B is a schematic structural diagram of an electronic cigarette according to an embodiment of the present invention;
FIG. 4C is a schematic structural diagram of an electronic cigarette according to an embodiment of the present invention.

### DETAILED DESCRIPTION OF PREFERRED EMBODIMENTS

In order to make the objects, the technical solution and the advantages of the present invention more clear, the embodiments of the present invention will be further described in detail below with reference to the accompanying drawings.

Before explaining the embodiments of the present invention in detail, the system architecture involved in the electronic cigarette management method provided by the embodiment of the present invention is briefly described.

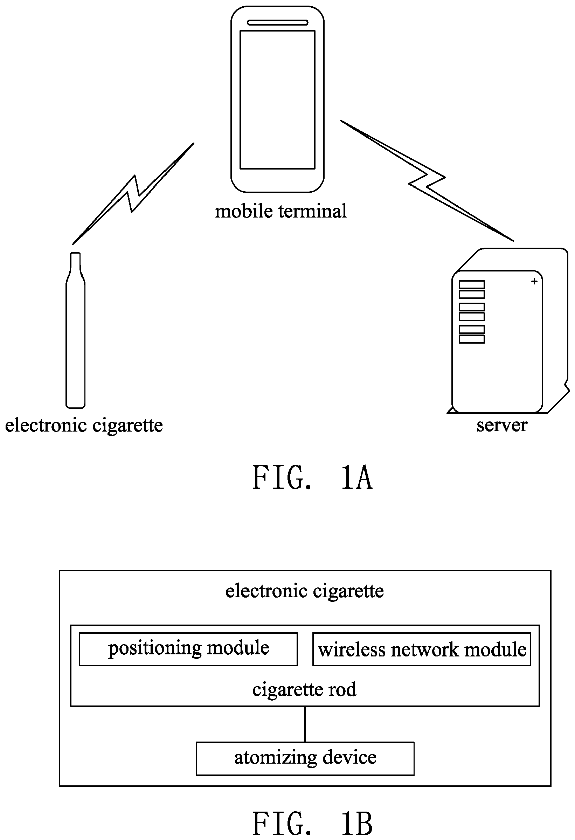

Referring to FIG. 1A, the system architecture includes three parts, namely, an electronic cigarette, a mobile terminal, and a server located in the cloud. The mobile terminal may be a smart phone, a wearable smart device, or a tablet computer. The type of the mobile terminal is not specifically limited in this embodiment of the present invention. The server may be a server provided by the manufacturer of the electronic cigarette, and may also be a server provided by a third party.

It should be noted that, as shown in FIG. 1B, in the embodiment of the present invention, in addition to the basic components including the cigarette rod and the atomizing device, the electronic cigarette further includes a positioning module and a wireless network module. The wireless network module may include any one of a WiFi (Wireless Fidelity) module, a Bluetooth module, a radio frequency module, and an infrared module. The positioning module and the wireless network module are provided on a PCBA (Printed Circuit Board + Assembly) board disposed inside the cigarette rod. The positioning module may be a GPS (Global Positioning System) module configured for positioning the location of the electronic cigarette; and the wireless network module is configured to perform data transmission between the electronic cigarette and the mobile terminal through wireless network.

In addition, in the embodiment of the present invention, in order to facilitate the user to perform the anti-counterfeiting verification on the electronic cigarette, a graphic identification code is further provided on the outer package of the electronic cigarette or the body of the electronic cigarette. The graphic identification code may be a two-dimensional code or a barcode, and is not specifically limited in this embodiment of the present invention. The graphic identification code carries various identity information about the electronic cigarette, such as the official website of the manufacturer that produces the electronic cigarette, the serial number of the electronic cigarette, the factory ID (Identity), etc. For detailed description, please refer to the following examples.

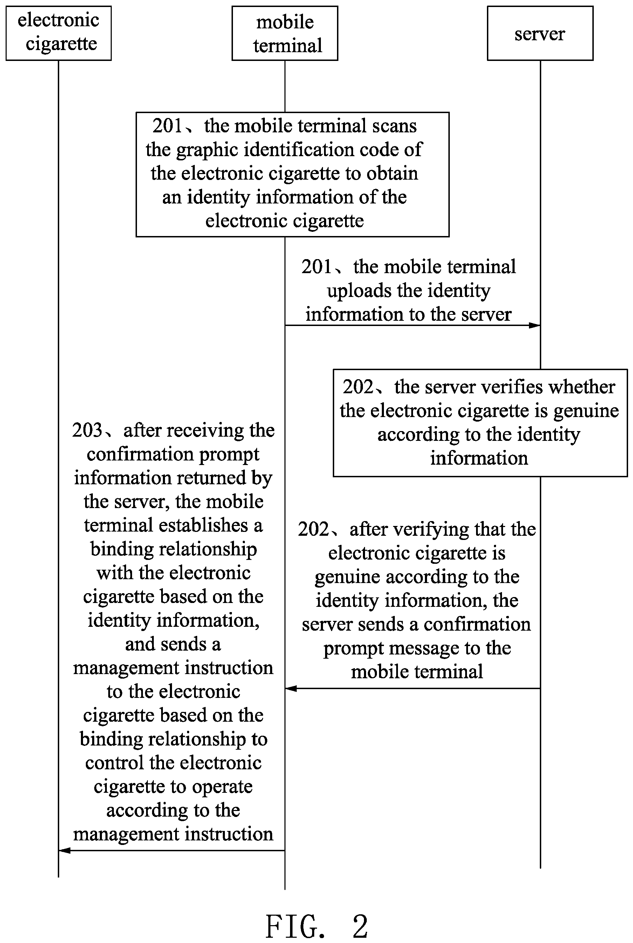

FIG. 2 is a flowchart of an electronic cigarette management method according to an embodiment of the present invention, wherein the interaction entities include an electronic cigarette, a mobile terminal, and a server. Referring to FIG. 2, the method provided by the embodiment of the present invention includes:

201: the mobile terminal scans the graphic identification code of the electronic cigarette to obtain an identity information of the electronic cigarette and uploads the identity information to the server.

In the embodiment of the present invention, the mobile terminal may invoke a specified application that matches the electronic cigarette to scan the graphic identification code of the electronic cigarette. The specified application that matches the electronic cigarette refers to the application that belongs to the same manufacturer as the electronic cigarette and is specifically used for managing the electronic cigarette. The installation package of the specified application can be downloaded from the official website of the electronic cigarette manufacturer or from a large application store, and installed on the mobile terminal.

The specified application has a scanning function. After the specified application is started, if the mobile terminal detects that the user performs the operation of starting the scanning function, the mobile terminal exhibits a scanning frame by the specified application; if the graphic identification code completely falls within the scanning frame, the specified application can perform the scanning by itself, to obtain the information carried in the graphic identification code. In addition to scanning the graphic identification code by using a specified application that matches the electronic cigarette, the graphic identification code of the electronic cigarette can also be scanned by using other types of applications having the scanning function, which is not specifically limited in the embodiment of the present invention. If the identity information is obtained by scanning through other applications, the specified application is further required to be executed to perform the subsequent binding step. That is, the electronic cigarette management method provided by the embodiment of the present invention further includes the following detecting steps.

The mobile terminal determines whether the application scanning the graphic identification code of the electronic cigarette is the specified application. Except for the identity information of the electronic cigarette, the graphic identification code generally further carries an identifying information of the specified application, so that after scanning the graphic identification code by invoking a certain application, it can be determined whether the application currently scanning the electronic cigarette is the specified application according to the identifying information carried in the graphic identification code. If the application currently scanning the graphic identification code is the specified application, then the subsequent binding step is continued to be performed by invoking the specified application. If the application currently scanning the graphic identification code is not the specified application, it is detected whether the specific application is installed locally based on the identifying information of the specified application; if the specified application is installed locally, then the specified application is directly invoked to perform the subsequent binding step; if the application currently scanning the graphic identification code is not the specified application and the specified application is not installed locally, the mobile terminal acquires and displays the download link page of the specified application, thereby prompting the user to download the installation package of the specified application and then perform installation of the specified application.

The identity information of the electronic cigarette may include an official website of the manufacturer, a serial number of the electronic cigarette, a factory ID of the electronic cigarette, an identifying information of the specified application that matches the electronic cigarette, an anti-counterfeiting information of the electronic cigarette, and the like. The content included in the identity information of the electronic cigarette is not specifically limited.

After the mobile terminal obtains the identity information of the electronic cigarette, in order to verify whether the electronic cigarette is genuine, the identity information of the electronic cigarette is usually uploaded to the server, and is verified by the server. For details, see step 202 below.

202: the server verifies whether the electronic cigarette is genuine according to the identity information; and after verifying that the electronic cigarette is genuine according to the identity information, the server sends a confirmation prompt message to the mobile terminal.

In the embodiment of the present invention, when the server verifies whether the electronic cigarette is genuine, the server may be implemented in the following manners.

The server queries whether the serial number of the electronic cigarette in the received identity information matches a certain serial number recorded in the database; if it matches, the electronic cigarette is verified to be genuine.

Alternatively, the server queries whether the factory ID of the electronic cigarette in the received identity information matches a certain factory ID recorded in the database; if it matches, the electronic cigarette is verified to be genuine.

Alternatively, the server queries whether the anti-counterfeiting information in the received identity information is true; if it is true, the electronic cigarette is verified to be genuine. For example, if the anti-counterfeiting information is an anti-counterfeiting verification code, after receiving the anti-counterfeiting verification code uploaded by the mobile terminal, the server compares the received anti-counterfeiting verification code with the real anti-counterfeiting verification code; if they are same, the electronic cigarette is verified to be genuine.

In addition to the above-mentioned manners of verifying whether the electronic cigarette is genuine or not, other verification methods may be adopted. The embodiment of the present invention does not specifically limit the manner in which the server verifies whether the electronic cigarette is genuine.

In another embodiment, if the server verifies that the electronic cigarette is not genuine, that is, a replica, the server sends to the mobile terminal a prompt information that the electronic cigarette is a replica, to remind the user on the mobile terminal side. In this case, the process ends here, and the following step 203 is no longer performed. If the server verifies that the electronic cigarette is genuine, a confirmation prompt information that the electronic cigarette is genuine is similarly sent to the mobile terminal, to remind the user on the mobile terminal side that the electronic cigarette is genuine. In this case, the process continues, that is, after receiving the confirmation prompt information, the mobile terminal continues to perform the following step 203.

203: after receiving the confirmation prompt information returned by the server, the mobile terminal establishes a binding relationship with the electronic cigarette based on the identity information, and sends a management instruction to the electronic cigarette based on the binding relationship to control the electronic cigarette to operate according to the management instruction.

After receiving the confirmation prompt information that the electronic cigarette is genuine, the mobile terminal establishes a binding relationship with the electronic cigarette, and based on the binding relationship, data transmission can be performed between the mobile terminal and the electronic cigarette. When the binding relationship is established, the mobile terminal uses the identity information of the electronic cigarette as the login account to log in the specified application that matches the electronic cigarette, and stores the corresponding relation between the identity information and the terminal identity of the mobile terminal, so as to establish the binding relationship between the mobile terminal and the electronic cigarette.

In another embodiment, after logging in the specified application, the mobile terminal may also display a prompt message of whether to set the login account to the user. For example, a prompt message such as "whether to set up a login account" is popped up on the terminal screen, and options such as "yes" and "no" are provided. After detecting the setting confirmation operation performed by the user, for example, after detecting that the user clicks the "Yes" option, the mobile terminal receives the login user name and the login password inputted by the user in the login account input box, and then uploads the login user name and the login password to the server located in the cloud, and the corresponding relation between the login user name, the login password, and the identity information of the electronic cigarette is stored by the server. In this way, the mobile terminal can log in the specified application by scanning the graphic identification code of the electronic cigarette, or can log in the specified application by inputting the login user name and the login password. In addition, the login user name can be associated with a plurality of electronic cigarettes, that is, the login user name can be stored corresponding to the identity information of the plurality of electronic cigarettes.

In summary, after the mobile terminal establishes a binding relationship with the electronic cigarette, the electronic cigarette can be managed based on the binding relationship. In the embodiment of the present invention, the management of the electronic cigarette is mainly divided into two aspects. In the first aspect, the user can query the location information of the electronic cigarette in real time through the mobile terminal, and the mobile terminal can prevent loss of the electronic cigarette based on the geographic distance between the mobile terminal and the electronic cigarette. In a second aspect, when the user performs suction of the electronic cigarette, the electronic cigarette may collect the user's suction data and send the user's suction data to the mobile terminal, so that the mobile terminal displays the user's suction data to the user or continues the subsequent analysis. That is, based on the established binding relationship, the mobile terminal sends two types of management instructions to the electronic cigarette, and controls the electronic cigarette to operate according to the management instructions, wherein one type of the management instructions is anti-lost management instruction for preventing the electronic cigarette from being lost, and the other type of the management instructions is suction data management instruction for instructing the electronic cigarette to perform suction data collection.

In view of the above first aspect, since the electronic cigarette has a positioning module built therein, the positioning module of the electronic cigarette can obtain the current location of the electronic cigarette, so that the electronic cigarette can periodically or regularly send its own first location to the mobile terminal that has established the binding relationship. In the embodiment of the present invention, since the electronic cigarette further has a wireless network module such as a WiFi module, a Bluetooth module, a radio frequency module or an infrared module, the electronic cigarette can be connected to the wireless network through the above module, that is, specifically, the first location of the electronic cigarette is sent to the mobile terminal through a wireless network.

It should be noted that, in the case of only point-to-point transmission between the electronic cigarette and the mobile terminal, the premise that the electronic cigarette and the mobile terminal can perform data transmission is that the electronic cigarette and the mobile terminal are located under the same wireless network, for example, a wireless connection is established between the same router and the two and there is a binding relationship between the two. At the same time, when data transmission is performed between the electronic cigarette and the mobile terminal, there may be a case where the network is not smooth or the transmission data is large, causing the data transmission efficiency to be too low. In this regard, data can be forwarded between the electronic cigarette and the mobile terminal through the server. The electronic cigarette transmits the data to be transmitted to the server first, and the server forwards the data to the mobile terminal; or the server stores the data first, and then transmits the data when the network is in good condition.

In addition, in order to enable the electronic cigarette to identify which terminal is the terminal with which the binding relationship is established, the mobile terminal may also send the binding relationship to the electronic cigarette after completing the establishment of the binding relationship with the electronic cigarette. In this way, the electronic cigarette knows which terminal it should send to after acquiring its own first location.

After receiving the first location sent by the electronic cigarette that has established the binding relationship through the wireless network, the mobile terminal also acquires its own second location, and calculates the geographic distance between the first location and the second location. If the geographic distance is greater than a preset threshold, the mobile terminal sends an anti-lost management instruction to the electronic cigarette, and after receiving the anti-lost management instruction, the electronic cigarette enters a locking state by itself, that is, the electronic cigarette can no longer be used. The value of the preset threshold may be 2 meters or 5 meters, etc., which is not specifically limited in this embodiment of the present invention, and the user can set it by himself. Optionally, the user may set a plurality of security areas on the mobile terminal, such as home, company, and the like; if the geographic distance is greater than the preset threshold, the mobile terminal determines whether the current location of the electronic cigarette is in the security areas, if it is in the security areas, the anti-lost management instruction is not sent to the electronic cigarette; if it is not in the security areas, the anti-lost management instruction is sent to the electronic cigarette.

In addition, in order to remind the user that the electronic cigarette may have been lost at this time, the mobile terminal may further generate and display a prompt information regarding the loss of the electronic cigarette if the geographic distance between the first location and the second location is greater than the preset threshold. The prompt information may be a push information in a text form, a voice ring, a vibrating reminder with a duration of N seconds, a flashing of a color for a period of time, or a combination of the at least two types of prompt information, etc., which is not specifically limited in this embodiment of the present invention. Optionally, when the mobile terminal generates and displays the prompt information, the user can confirm whether the electronic cigarette is lost. If the user confirms the loss, the mobile terminal sends an anti-lost management instruction to the electronic cigarette; if the user cancels, the anti-lost management instruction is not sent.

In addition, in some cases, although the geographic distance between the mobile terminal and the electronic cigarette is greater than the preset threshold, this may be the user's own placement or the user knows the location of the electronic cigarette. For these situations, it is not needed to lock the electronic cigarette. In other words, in order to prevent, in any case, the process of locking the electronic cigarette and prompting the user from being triggered as long as the geographic distance between the electronic cigarette and the mobile terminal is greater than the preset threshold, the embodiment of the present invention may set a functional option of opening the anti-lost mode in the specified application. When the user sets the anti-lost mode in the specified application, that is, the user triggers the functional option, the mobile terminal sends an opening instruction to the electronic cigarette to enter the anti-lost mode, and when the electronic cigarette receives the foregoing opening instruction, it enters anti-lost mode. If the anti-lost mode is enabled by the user, the mobile terminal sends an anti-lost management instruction to the electronic cigarette based on the established binding relationship as long as the geographic distance between the first location and the second location is greater than the preset threshold, to trigger the electronic cigarette to lock. At the same time, in the anti-lost mode, the mobile terminal may further generate and display a prompt information regarding the loss of the electronic cigarette, so as to remind the user. If the user turns off the anti-lost mode, the mobile terminal does not respond to the geographic distance even if the geographic distance between the electronic cigarette and the mobile terminal is greater than the preset threshold.

Extensiblely, in the case that the electronic cigarette is in the anti-lost mode, in addition to entering the locking state by receiving the anti-lost management instruction sent by the mobile terminal, the electronic cigarette can also enter the locking state by itself when determining that the geographic distance between the electronic cigarette and the mobile terminal is greater than the above-mentioned preset threshold. The specific process is as follows: the electronic cigarette acquires its own first location, and receives the second location sent by the mobile terminal using the wireless network; afterwards, the electronic cigarette calculates the geographic distance between the first location and the second location; if the geographic distance is greater than the preset threshold, the electronic cigarette automatically enters the locking state.

In the second aspect, when the electronic cigarette detects the user's suction action through an airflow sensor, the user's suction data is actively collected, and the user's suction data is transmitted to the mobile terminal that has established the binding relationship through the wireless network. It should be noted that the user's suction data may be collected by the electronic cigarette when the user's suction action is detected after receiving the suction data management instruction sent by the mobile terminal, or may be collected spontaneously, periodically or regularly by the electronic cigarette, which is not specifically limited in the embodiment of the present invention. In other words, the electronic cigarette may collect the user's suction data spontaneously, periodically or regularly when the collected user's suction data is transmitted to the mobile terminal/server. For example, the collected suction data is sent to the mobile terminal/server each time when it is collected; the collected suction data is sent to the mobile terminal/server every 3 hours; the collected suction data is sent to the mobile terminal/server at 10:00 every night.

The user's suction data may include the frequency of suction, the suction time, the number of suction puffs, and the like. After receiving the user's suction data, the mobile terminal may directly display the user's suction data through the specified application that matches the electronic cigarette to remind the user. Alternatively, the user's suction data can be uploaded to the server, so that the server can perform analysis on the user's suction data.

For example, the server analyzes the user's daily suction frequency, the approximate time of the suction, the average number of suction puffs according to the user's suction data of a period of time. For example, the server further analyzes, according to the user's suction data, whether the user's current amount of suction is too large, the degree of influence of the current amount of suction on the health of the body, and the like. The type of analysis is not specifically limited in the embodiment of the present invention. After obtaining the analysis result of the user's suction data, the server returns the analysis result to the mobile terminal, and the mobile terminal displays the analysis result through the specified application to remind the user.

It should be noted that, in the embodiment of the present invention, the graphic identification code may be randomly generated according to the identity information of the electronic cigarette and the identifying information of the specified application. For example, each time the electronic cigarette needs to be bound with a mobile terminal, a two-dimensional code is randomly generated according to the identity information of the electronic cigarette and the identifying information of the specified application, and is displayed through the display screen of the electronic cigarette or transmitted to the mobile terminal for display, in order for the user to scan. The graphic identification code generated each time by the electronic cigarette may be same or different, which is not limited in this embodiment.

Optionally, in the embodiment of the present invention, the geographic distance between the first location and the second location may be calculated by the electronic cigarette, or may be calculated by the mobile terminal; in addition, the electronic cigarette and the mobile terminal may send the first location and the second location to the server, and the geographic distance between the first location and the second location is calculated by the server, and the calculated geographic distance is sent to the electronic cigarette and the mobile terminal.

In the method provided by the embodiment of the present invention, since the electronic cigarette is provided with the graphic identification code, the mobile terminal can scan the graphic identification code and upload the identity information of the electronic cigarette obtained by scanning the code to the server, so as to verify whether the electronic cigarette is genuine and realize the purpose of anti-counterfeiting; in addition, after the server verifies that the electronic cigarette is genuine, the mobile terminal can establish a binding relationship with the electronic cigarette based on the identity information obtained by scanning the code, and can further diversify the management of the electronic cigarette based on the binding relationship, so as to expand the function of the electronic cigarette to make it more intelligent.

Further, since the electronic cigarette has a positioning module and a wireless network module, the electronic cigarette can locate itself in real time, and the first location obtained by the locating is sent to the mobile terminal through the wireless network module, so that the user can conveniently query the location of the electronic cigarette in real time. In addition, when the geographic distance between the first location and the second location of the mobile terminal is greater than the preset threshold, the mobile terminal may also trigger the electronic cigarette to enter the locking state and prompt the user, thereby realizing the anti-lost management of the electronic cigarette, not only expanding the function of the electronic cigarette, but also achieving the diversified management of the electronic cigarette, so as to meet the diverse needs of the users.

In addition, the electronic cigarette may also collect and send the user's suction data to the mobile terminal when detecting the user's suction action, so that the mobile terminal displays the user's suction data, and uploads the user's suction data to the server for analysis. Thus, the electronic cigarette is more intelligent and further meets the diverse needs of the users.

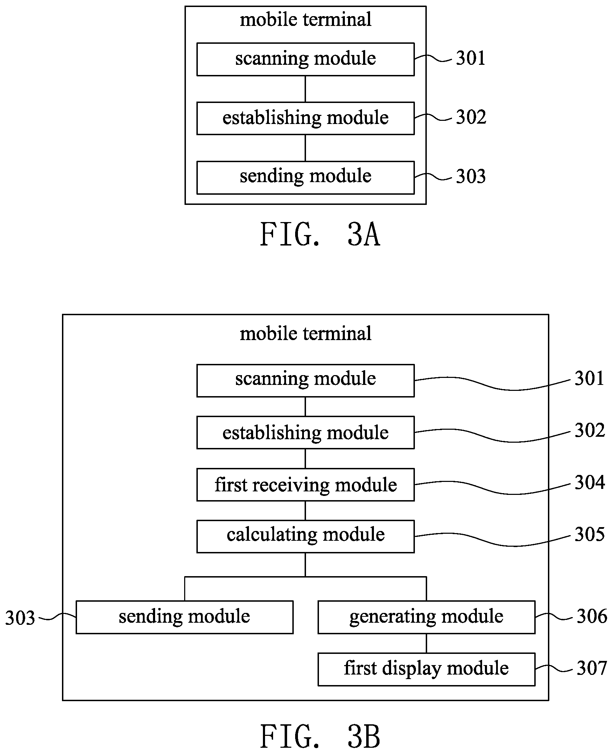

FIG. 3A is a schematic structural diagram of a mobile terminal according to an embodiment of the present invention. Referring to FIG. 3A, the mobile terminal includes:
a scanning module 301 configured to scan a graphic identification code of the electronic cigarette to obtain an identity information of the electronic cigarette; when scanning the graphic identification code, the scanning module 301 is generally implemented by using a camera of the mobile terminal.
an establishing module 302 configured to establish a binding relationship with the electronic cigarette based on the identity information;
a sending module 303 configured to send a management instruction to the electronic cigarette based on the binding relationship to control the electronic cigarette to operate according to the management instruction; wherein the management instruction at least includes anti-lost management instruction and suction data management instruction.

In the mobile terminal provided by the embodiment of the present invention, since the electronic cigarette is provided with the graphic identification code, the mobile terminal can scan the graphic identification code and upload the identity information of the electronic cigarette obtained by scanning the code to the server, to verify whether the electronic cigarette is genuine and realize the purpose of anti-counterfeiting; in addition, after the server verifies that the electronic cigarette is genuine, the mobile terminal can establish a binding relationship with the electronic cigarette based on the identity information obtained by scanning the code, and can further diversify the management of the electronic cigarette based on the binding relationship, so as to expand the function of the electronic cigarette to make it more intelligent.

In another embodiment, referring to FIG. 3B, the mobile terminal further includes:
a first receiving module 304 configured to receive, by using a wireless network, first location sent by the electronic cigarette that has established the binding relationship;
a calculating module 305 configured to calculate a geographic distance between the first location and the second location of the mobile terminal;

The sending module 303 is configured to send, when the geographic distance is greater than a preset threshold, an anti-lost management instruction to the electronic cigarette based on the binding relationship, wherein the anti-lost management instruction is used to control the electronic cigarette to enter the locking state.

The mobile terminal further includes:
a generating module 306 configured to generate, when the geographic distance is greater than the preset threshold, a missing prompt information of the electronic cigarette;
a first display module 307 configured to display the missing prompt information of the electronic cigarette.

In practice, the missing prompt information is specifically displayed on the display screen of the mobile terminal.

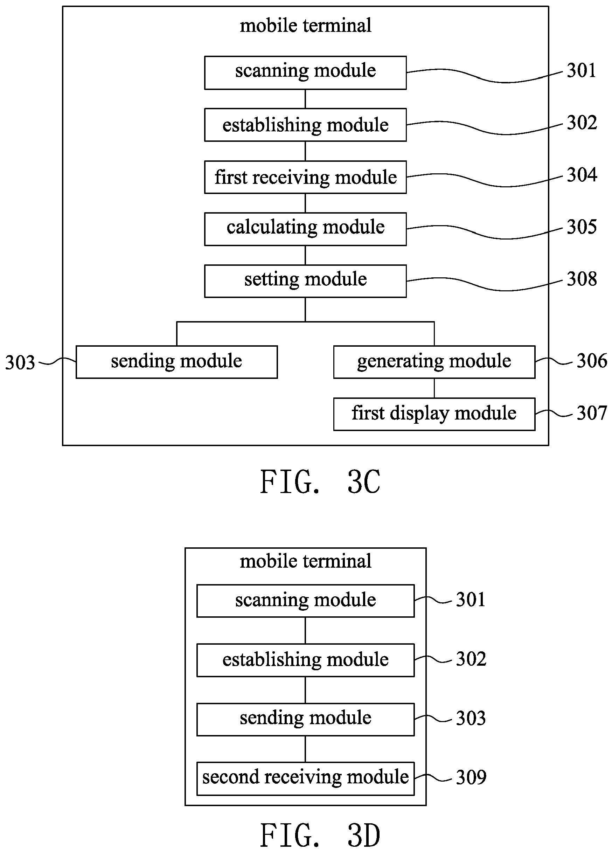

In another embodiment, referring to FIG. 3C, the mobile terminal further includes:
a setting module 308 configured to set a functional option of opening the anti-lost mode in a specified application that matches the electronic cigarette;

The sending module 303 is further configured to send, if the functional option is triggered, an opening instruction to the electronic cigarette to open the anti-lost mode, wherein the opening instruction is used to control the electronic cigarette to enter the anti-lost mode.

The sending module 303 is configured to send an anti-lost management instruction to the electronic cigarette based on the binding relationship in the case that the anti-lost mode of the electronic cigarette is opened.

The generating module 306 is configured to generate a missing prompt information of the electronic cigarette if the geographic distance is greater than the preset threshold in the case that the anti-lost mode of the electronic cigarette is opened.

In another embodiment, referring to FIG. 3D, the sending module 303 is configured to send a suction data management instruction to the electronic cigarette based on the binding relationship; the mobile terminal further includes:

a second receiving module 309 configured to receive, by using a wireless network, the user's suction data sent by the electronic cigarette that has established the binding relationship, and the user's suction data is collected by the electronic cigarette when detecting the suction action of the user after receiving the suction data management instruction.

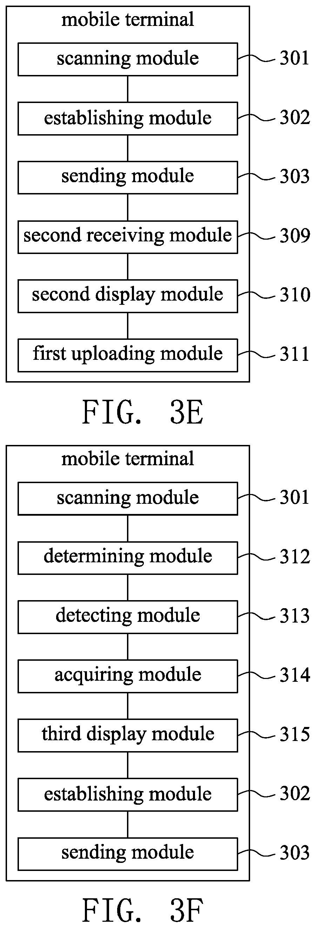

In another embodiment, referring to FIG. 3E, the mobile terminal further includes:
a second display module 310 configured to display the user's suction data after receiving the user's suction data;

In practice, the user's suction data is specifically displayed through the display screen of the mobile terminal.
a first uploading module 311 configured to upload the user's suction data to the server, wherein the server is configured to analyze the user's suction data and return the obtained analysis result to the mobile terminal.

The second display module 310 is further configured to display the analysis result after receiving the analysis result.

In practice, the analysis result is specifically displayed on the display screen of the mobile terminal.

In another embodiment, the establishing module 302 is configured to log in the specified application that matches the electronic cigarette by using the identity information as the login account, and store the corresponding relation between the identity information and the terminal identity information of the mobile terminal, to thereby complete the establishment of the binding relationship with the electronic cigarette.

In another embodiment, referring to FIG. 3F, the mobile terminal further includes:
a determining module 312 configured to determine whether the application scanning the graphic identification code is a specified application;
if the application scanning the graphic identification code is the specified application, the establishing module 302 is configured to continue to invoke the specified application to perform the step of establishing the binding relationship with the electronic cigarette based on the identity information;
a detecting module 313 configured to detect, if the application scanning the graphic identification code is not the specified application, whether the specified application is installed locally; and if the specified application is locally installed, the establishing module 302 is configured to invoke the specified application to perform the step of establishing the binding relationship with the electronic cigarette based on the identity information;
an acquiring module 314 configured to acquire a download link page of the specified application if the application scanning the graphic identification code is not the specified application and the specified application is not installed locally;
a third display module 315 configured to display the download link page of the specified application.

In practice, the download link page is specifically displayed on the display screen of the mobile terminal.

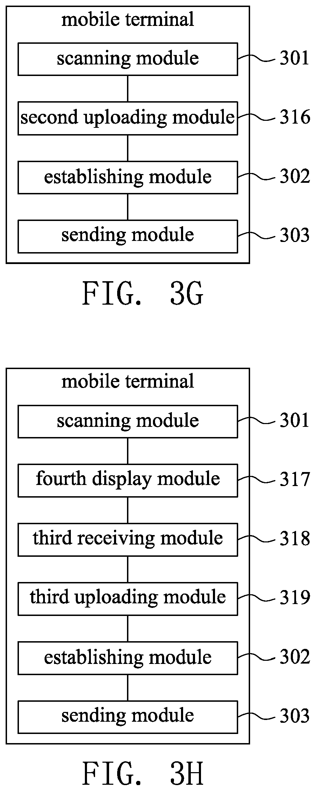

In another embodiment, referring to FIG. 3G, the mobile terminal further includes:
a second uploading module 316 configured to upload the identity information to the server; the server is configured to send a confirmation prompt information to the mobile terminal after determining that the electronic cigarette is genuine according to the identity information.

The establishing module 302 is configured to perform the step of establishing the binding relationship with the electronic cigarette based on the identity information after receiving the confirmation prompt information.

In another embodiment, referring to FIG. 3H, the mobile terminal further includes:
a fourth display module 317 configured to display, after logging in the specified application, a prompt information of whether to set the login account;

In practice, the prompt information of setting the login account is displayed through the display screen of the mobile terminal.
a third receiving module 318 configured to receive a login user name and a login password inputted by the user after detecting the setting confirmation operation performed by the user;
a third uploading module 319 configured to upload the login user name and the login password inputted by the user to the server; the server stores the corresponding relation between the login user name, the login password, and the identity information.

All of the above-described technical solutions may be arbitrarily combined to form optional embodiments of the present invention, and will not be further described herein.

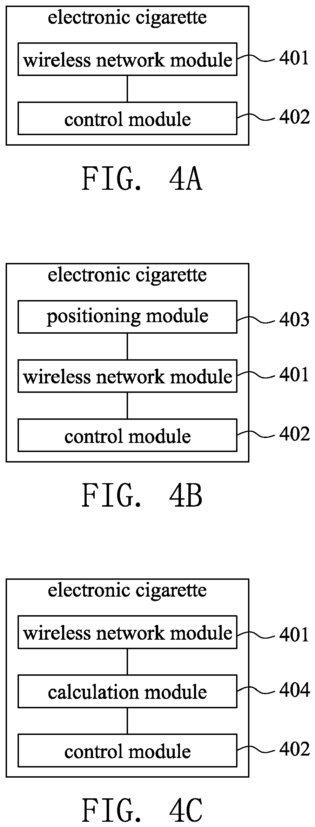

FIG. 4A is a schematic structural diagram of an electronic cigarette according to an embodiment of the present invention. Referring to FIG. 4A, the electronic cigarette includes:
a wireless network module 401 configured to receive, according to the binding relationship established with the mobile terminal, a management instruction sent by the mobile terminal;
a control module 402 configured to control the electronic cigarette to operate according to the management instruction;
wherein the binding relationship is established by the mobile terminal based on the identity information of the electronic cigarette, and the identity information is obtained by scanning the graphic identification code of the electronic cigarette using the mobile terminal. The management instruction at least includes anti-lost management instruction and suction data management instruction.

In the electronic cigarette provided by the embodiment of the present invention, after the binding relationship is established between the electronic cigarette and the mobile terminal based on the identity information of the electronic cigarette, the electronic cigarette can send the first location acquired by the positioning module to the mobile terminal through the wireless network module. The mobile terminal then determines whether to send an anti-lost management instruction to the electronic cigarette based on the geographic distance between the first location and the second location of the mobile terminal; the electronic cigarette can actively enter the locking state after receiving the anti-lost management instruction sent by the mobile terminal. Thus, the present invention not only expands the function of the electronic cigarette, but also makes it more intelligent, so as to realize diversified management of the electronic cigarette.

In another embodiment, referring to FIG. 4B, the electronic cigarette further includes:
a positioning module 403 configured to acquire first location, wherein the first location is the location information of the electronic cigarette.

The wireless network module 401 is configured to send, by using a wireless network, the first location to the mobile terminal that has established the binding relationship. The mobile terminal is configured to calculate a geographic distance between the first location and the second location of the mobile terminal. When detecting that the geographic distance is greater than a preset threshold and the anti-lost mode of the electronic cigarette is opened, the mobile terminal sends an anti-lost management instruction to the electronic cigarette that has established the binding relationship.

The control module 402 is configured to control the electronic cigarette to enter the locking state after receiving the anti-lost management instruction based on the binding relationship.

In another embodiment, referring to FIG. 4C, the wireless network module 401 is further configured to receive, by using a wireless network, second location sent by the mobile terminal that has established the binding relationship; the electronic cigarette further includes:
a calculation module 404 configured to calculate a geographic distance between the first location and the second location.

The control module 402 is configured to control the electronic cigarette to enter the locking state if the geographic distance is greater than a preset threshold.

In another embodiment, the wireless network module 401 is further configured to receive an opening instruction of the anti-lost mode sent by the mobile terminal based on the binding relationship, wherein the opening instruction is sent by the mobile terminal when the functional option of the anti-lost mode is triggered in a specified application that matches the electronic cigarette.

The control module 402 is further configured to control the electronic cigarette to enter the anti-lost mode according to the opening instruction.

The control module 402 is further configured to control the electronic cigarette to enter the locking state if the electronic cigarette is in the anti-lost mode and the geographic distance is greater than the preset threshold.

In another embodiment, the control module 402 is configured to collect the user's suction data when detecting the suction action of the user after receiving the suction data management instruction sent by the mobile terminal that has established the binding relationship.

The wireless network module 401 is configured to send the user's suction data to the mobile terminal by using a wireless network, the mobile terminal is configured to display the user's suction data, and upload the user's suction data to the server. The server performs analysis on the user's suction data, and the obtained analysis result is returned to the mobile terminal, so that the mobile terminal can display the analysis result.

All of the above-described technical solutions may be arbitrarily combined to form optional embodiments of the present invention, and will not be further described herein.

It should be noted that, when managing the electronic cigarette, the mobile terminal provided by the above embodiments is illustrated by various functional modules. In actual practice, the above functions may be accomplished by different functional modules as needed, i.e., by dividing the internal structure of the mobile terminal into different functional modules to perform all or part of the functions described above. In addition, the mobile terminal or the electronic cigarette provided by the foregoing embodiments is within the same concept as the embodiment of the electronic cigarette management method. The specific implementations can refer to the method embodiment, and details are not described herein again.

An embodiment of the present invention further provides a mobile terminal. The mobile terminal includes a processor and a memory. The processor is configured for executing computer program instructions to complete various processes and methods. The memory is configured for storing program instructions. By executing the program instructions, the processor can implement the electronic cigarette management method as described in any of the above embodiments.

An embodiment of the present invention further provides a computer readable storage medium. The computer readable storage medium has stored therein one or more instructions. When the one or more instructions is implemented by the processor in the mobile terminal, the electronic cigarette management method in any of the above embodiments is realized.

An embodiment of the present invention also provides an electronic cigarette. The electronic cigarette includes a processor and a memory. The processor is configured for executing computer program instructions to complete various processes and methods. The memory is configured for storing program instructions. By executing the program instructions, the processor can implement the electronic cigarette management method as described in any of the above embodiments.

An embodiment of the present invention further provides a computer readable storage medium. The computer readable storage medium has stored therein one or more instructions. When the one or more instructions is implemented by the processor in the electronic cigarette, the electronic cigarette management method in any of the above embodiments is realized.

A person skilled in the art may understand that implementing all or part of the steps in the above embodiments may be completed by hardware, or may be executed by a computer program to instruct related hardware, and the computer program may be stored in a computer readable storage medium. The storage medium mentioned may be a read only memory, a magnetic disk, an optical disk, and the like.

The above are only the preferred embodiments of the present invention, and are not intended to limit the present invention. Any modifications, equivalents, improvements, etc., which are within the scope of the present invention, should be included in the protection scope of the present invention.

## Claims

1. An electronic cigarette management method applied to a mobile terminal, the method comprising:
S1: scanning a graphic identification code of an electronic cigarette to obtain an identity information of the electronic cigarette;
S2: establishing a binding relationship with the electronic cigarette based on the identity information;
S3: sending a management instruction to the electronic cigarette based on the binding relationship to control the electronic cigarette to operate according to the management instruction.

2. The method according to claim **1,** wherein the step of S3 comprises:
S31: acquiring a geographic distance between a first location of the electronic cigarette and a second location of the mobile terminal;
S32: if the geographic distance is greater than a preset threshold, sending an anti-lost management instruction to the electronic cigarette based on the binding relationship, the anti-lost management instruction being configured to control the electronic cigarette to enter a locking state.

3. The method according to claim **2,** wherein the step of S32 comprises:
S321: if the geographic distance is greater than the preset threshold, generating and displaying a missing prompt information of the electronic cigarette;
S322: when receiving an operation confirming that the electronic cigarette is lost, sending the anti-lost management instruction to the electronic cigarette based on the binding relationship.

4. The method according to claim **2,** wherein the method further comprises:
setting a functional option of opening the anti-lost mode in a specified application matching the electronic cigarette;
when detecting a triggering operation of the functional option, sending an opening instruction of the anti-lost mode to the electronic cigarette, the opening instruction being configured to control the electronic cigarette to enter the anti-lost mode;
wherein in the step of S32, sending an anti-lost management instruction to the electronic cigarette based on the binding relationship comprises:
sending the anti-lost management instruction to the electronic cigarette based on the binding relationship in the case that the anti-lost mode of the electronic cigarette is enabled;
wherein the step of S321 comprises:
if the geographic distance is greater than the preset threshold, generating and displaying the missing prompt information of the electronic cigarette in the case that the anti-lost mode of the electronic cigarette is enabled.

5. The method according to claim **1,** wherein the step of S3 comprises:
S33: sending a suction data management instruction to the electronic cigarette based on the binding relationship;
S34: receiving, by using a wireless network, the user's suction data sent by the electronic cigarette that has established the binding relationship, the user's suction data being collected by the electronic cigarette when the user's suction action is detected after receiving the suction data management instruction.

6. The method according to claim **5,** wherein the method further comprises:
displaying the user's suction data after receiving the user's suction data, and uploading the user's suction data to the server, wherein the server is configured to analyze the user's suction data and return the obtained analysis result to the mobile terminal;
displaying the analysis result after receiving the analysis result.

7. The method according to claim **1,** wherein the method further comprises:
determining whether an application scanning the graphic identification code is a specified application that matches the electronic cigarette;
if the application scanning the graphic identification code is the specified application, continuing to invoke the specified application to perform the step of S2;
if the application scanning the graphic identification code is not the specified application, detecting whether the specified application is installed locally; if the specified application is installed locally, invoking the specified application to perform the step of S2;
if the application scanning the graphic identification code is not the specified application and the specified application is not installed locally, acquiring and displaying the download link page of the specified application.

8. An electronic cigarette management method applied to an electronic cigarette, the method comprising:
receiving a management instruction sent by a mobile terminal based on a binding relationship established with the mobile terminal;
controlling the electronic cigarette to operate according to the management instruction;
wherein the binding relationship is established by the mobile terminal based on an identity information of the electronic cigarette, and the identity information is obtained by scanning the graphic identification code of the electronic cigarette using the mobile terminal.

9. The method according to claim **8,** wherein the method further comprises:
acquiring first location, the first location being the location information of the electronic cigarette;
sending the first location, by using a wireless network, to the mobile terminal that has established the binding relationship, wherein the mobile terminal is configured to acquire a geographic distance between the first location and a second location of the mobile terminal, and send an anti-lost management instruction to the electronic cigarette based on the binding relationship when detecting that the geographic distance is greater than a preset threshold and the anti-lost mode of the electronic cigarette is opened, the anti-lost management instruction being used to control the electronic cigarette to enter a locking state;
wherein the step of controlling the electronic cigarette to operate according to the management instruction comprises:
after receiving the anti-lost management instruction, controlling the electronic cigarette to enter the locking state based on the binding relationship.

10. The method according to claim **8,** wherein the method further comprises:
receiving, by using a wireless network, second location sent by the mobile terminal that has established the binding relationship;
wherein the step of controlling the electronic cigarette to operate according to the management instruction comprises:
calculating a geographic distance between a first location of the electronic cigarette and the second location;
controlling the electronic cigarette to enter a locking state if the geographic distance is greater than a preset threshold.

11. The method according to claim **10,** wherein the method further comprises:
receiving, according to the binding relationship, an opening instruction of the anti-lost mode sent by the mobile terminal, wherein the opening instruction is sent by the mobile terminal after detecting a triggering operation of a functional option of opening the anti-lost mode in a specified application matching the electronic cigarette;
controlling the electronic cigarette to enter the anti-lost mode according to the opening instruction;
wherein the step of controlling the electronic cigarette to enter a locking state if the geographic distance is greater than a preset threshold comprises:
controlling the electronic cigarette to enter the locking state if the electronic distance is greater than the preset threshold in the case that the electronic cigarette is in the anti-lost mode.

12. The method according to claim **8,** wherein the step of controlling the electronic cigarette to operate according to the management instruction comprises:
after receiving a suction data management instruction sent by the mobile terminal that has established the binding relationship, collecting the user's suction data when the user's suction action is detected;
sending the user's suction data to the mobile terminal by using a wireless network, wherein the mobile terminal is configured to display the user's suction data and upload the user's suction data to a server, the server is configured to analyze the user's suction data and return the obtained analysis result to the mobile terminal for displaying the analysis result on the mobile terminal.

13. A mobile terminal, comprising:
a memory and a processor;
wherein the memory stores therein at least one program instruction;
the processor, by executing the at least one program instruction, implements the electronic cigarette management method according to any one of claims **1** to **7.**

14. A computer readable storage medium having stored therein one or more instructions, wherein the one or more instructions are executed by a processor within a mobile terminal to implement the electronic cigarette management method according to any one of claims **1** to **7.**

15. An electronic cigarette, comprising:
a memory and a processor;
wherein the memory stores therein at least one program instruction;
the processor, by executing the at least one program instruction, implements the electronic cigarette management method according to any one of claims **8** to **12.**

16. A computer readable storage medium having stored therein one or more instructions, wherein the one or more instructions are executed by a processor within an electronic cigarette to implement the electronic cigarette management method according to any one of claims **8** to **12.**
